(19) **Europäisches Patentamt European Patent Office Office européen des brevets**

(11) **EP 1 234 848 B1**

(12) **EUROPÄISCHE PATENTSCHRIFT**

(45) Veröffentlichungstag und Bekanntmachung des Hinweises auf die Patenterteilung:
**16.12.2009 Patentblatt 2009/51**

(51) Int Cl.:
*C08J 5/18* (2006.01)     *C08K 3/00* (2006.01)
*B29C 55/00* (2006.01)

(21) Anmeldenummer: **02003129.0**

(22) Anmeldetag: **14.02.2002**

(54) **Transparent, biaxial orientierte Polyesterfolie**

Transparent biaxially oriented polyesterfilm

Film de polyester transparent orienté biaxialement

(84) Benannte Vertragsstaaten:
**DE FR GB IT LU NL**

(30) Priorität: **26.02.2001 DE 10109217**

(43) Veröffentlichungstag der Anmeldung:
**28.08.2002 Patentblatt 2002/35**

(73) Patentinhaber: **Mitsubishi Polyester Film GmbH 65203 Wiesbaden (DE)**

(72) Erfinder:
• **Pfeiffer, Herbert, Dr. Prof.**
  **55126 Mainz (DE)**
• **Müller-Roosen, Martin, Dr.**
  **55128 Mainz (DE)**
• **Hilkert, Gottfried, Dr.**
  **55291 Saulheim (DE)**

(74) Vertreter: **Schweitzer, Klaus et al Plate Schweitzer Zounek Patentanwälte Rheingaustrasse 196 65203 Wiesbaden (DE)**

(56) Entgegenhaltungen:
**EP-A- 0 053 498     US-A- 3 154 461 US-A- 4 990 400**

• **DATABASE WPI Section Ch, Week 198441 Derwent Publications Ltd., London, GB; Class A23, AN 1984-253421 XP002202058 & JP 59 152948 A (NIPPON MAGPHANE KK), 31. August 1984 (1984-08-31)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine transparente, biaxial orientierte Polyesterfolie bestehend aus einer Schicht, die mindestens 80 Gew.-% thermoplastischen Polyester enthält. Die Erfindung betrifft weiterhin ein Verfahren für die Herstellung der Folie und ihre Verwendung.

Die erfindungsgemäße Polyesterfolie enthält zusätzlich ein spezielles Pigmentsystem, welches für eine verbesserte Wicklung der Folie sorgt und zu einer hoch transparenten Folie mit hoch glänzenden Oberflächen führt. Die Folie ist für die Verwendung als Verpackungsfolie, insbesondere für die Metallisierung oder die keramische Beschichtung und für Anwendungen im industriellen Sektor, z.B. als Substrat für Prägefolien, sehr gut geeignet.

Die Verpackungsindustrie hat einen hohen Bedarf an hoch transparenten und hoch glänzenden Kunstofffolien, wie z.B. biaxial orientierten Polypropylen- oder biaxial orientierten Polyesterfolien. Solche hoch transparenten und hoch glänzenden Folien zeichnen sich durch ein charakteristisches optisches Erscheinungsbild aus und verleihen dadurch der Verpackung ein besonderes attraktives und damit werbewirksames Aussehen. Problematisch an Folien, bei denen hohe Ansprüche an die Folienoptik gestellt werden, ist u.a. ihre Wickelbarkeit. Sie genügt nicht immer den gestellten Erfordernissen, insbesondere dann, wenn die Maschinenrollen zu breiten Kundenrollen mit großer Lauflänge verarbeitet werden.

Im Stand der Technik wird dargestellt, wie die optischen Eigenschaften, insbesondere der Glanz und die Trübung, biaxial orientierter Polyesterfolien verbessert werden können.

In der EP 347 646 wird eine biaxial orientierte Polyesterfolie beschrieben, die mindestens eine Deckschicht (A) aufweist, die einen Füllstoff in einer Konzentration von 0,5 bis 50 Gew.-% enthält, wobei der Durchmesser dieses Füllstoffes in einem bestimmten Verhältnis zur Schichtdicke der Deckschicht steht. Weiterhin weist die Deckschicht eine bestimmte Dicke und einen bestimmten Kristallisationsgrad auf, der mit Hilfe der Raman-Spektroskopie ermittelt wird. Auf Grund der Topographie der Deckschicht A eignet sich die Folie insbesondere für magnetische Aufzeichnungsbänder. Über die Transparenz der Folie und den erzielten Glanz der Deckschicht A gibt die Schrift keine Auskunft. Eine nach der EP-A 347 646, Beispiel 1, hergestellte Folie hatte nicht die gewünschte Transparenz und nicht die gewünschte glänzende Oberfläche. Der Glanz dieser Oberfläche und die Trübung der Folie liegt außerhalb dem in dieser Schrift beanspruchten Bereich.

In der EP-A-0 514 129 wird eine transparente Mehrschichtfolie beschrieben, die ein Primärschicht-Substrat aus Polymermaterial umfasst, welches mindestens auf einer seiner Oberflächen eine Sekundärschicht aus Polymermaterial besitzt, die Glasperlen und Siliciumdioxidpartikeln in bestimmten Konzentrationen und in bestimmten Größenverteilungen aufweist. Die Sekundärschicht kann auf einer bzw. auf beiden Seiten des Primärschicht-Substrates angeordnet sein. Mit der Folie werden die Trübung und die Verarbeitungseigenschaften verbessert, eine Lehre zur Verbesserung des Glanzes und der Wickelbarkeit der Folie vermittelt die Schrift jedoch nicht.

In der EP-A-0 604 057 wird eine transparente Mehrschichtfolie beschrieben, die ein Primärschicht-Substrat aus Polymermaterial umfasst, das im wesentlichen frei ist von Füllern und das mindestens auf einer seiner Oberflächen eine Sekundärschicht aus Polymermaterial besitzt, die als Füller Silikon-Harz in einer Konzentration von 100 bis 1000 ppm enthält, der einen mittleren Partikeldurchmesser von 1,5 bis 12,5 $\mu$m aufweist. Nachteilig an den Silikon Partikeln ist, dass diese vergleichsweise teuer sind und deshalb für den Verpackungsmarkt keine akzeptable Lösung darstellen. Außerdem neigen Folien, die mit solchen Pigmenten ausgerüstet sind, beim Wickeln zum Teleskopieren. Ebenfalls finden sich auch in dieser Schrift keinerlei Hinweise darauf, wie die Topographie einer solchen Folie für die gleichzeitige Verbesserung von Glanz und Wickelbarkeit eingestellt werden soll.

Die DE-A-16 94 404 beschreibt einen Schichtstoff mit einer Mehrzahl von Schichten eines orientierten kristallisierbaren thermoplastischen Filmes, worin mindestens eine der äußeren Schichten einen Zusatz enthält. Die Zusätze sind übliche inerte anorganische oder organische Partikel, die im Falle von inerten Partikeln wie $SiO_2$ in einer Konzentration von 1 bis 25 Gew.-% den äußeren Schichten zugegeben werden. Die Teilchengröße beträgt dabei 2 bis 20 $\mu$m. Die Schichtstoffe können z.B. für dekorative Zwecke mit Aluminium metallisiert oder für Magnetbänder verwendet werden. Mit der Lehre dieser Schrift können zwar die Verarbeitungseigenschaften und die Trübung der Folie verbessert werden, eine Lehre zur Verbesserung des Glanzes und der Wickelbarkeit der Folie vermittelt die Schrift jedoch nicht.

Die EP-A-0 502 745 beschreibt eine koextrudierte biaxial orientierte Polyesterfolie mit wenigstens drei Schichten, von denen eine äußere Schicht A

a) anorganische Teilchen mit einer mittleren Primärteilchengröße D im Bereich von 1 bis 100 nm enthält, die der Gleichung D<T<200D genügt, worin T die Dicke der Schicht A ist,
b) Teilchen B mit einer mittleren Primärteilchengröße D1 im Bereich von 0,3 bis 2 $\mu$m enthält und einer Primärteilchen-Größenverteilung mit einer relativen Standardabweichung von höchstens 0,6 und
c) wobei die mittlere Primärteilchengröße D der Teilchen A geringer ist als die mittlere Primärteilchengröße D1 der Teilchen B ist.

Durch Anwendung der Lehre dieser Schrift wird insbesondere das Verarbeitungsverhalten der Folie verbessert. Eine Lehre zur Verbesserung des Glanzes, der Trübung und der Wickelbarkeit der Folie wird in der Schrift nicht aufgezeigt.

Aufgabe der vorliegenden Erfindung war es nun, eine biaxial orientierte Polyesterfolie zur Verfügung zu stellen, die sich durch sehr gute optische Eigenschaften auszeichnet und insbesondere einen sehr hohen Glanz und eine sehr niedrige Trübung aufweist. Weiterhin soll die Folie sehr gut wickelbar sein, insbesondere dann, wenn die Maschinenrolle zu breiten Kundenrollen mit großer Lauflänge verarbeitet wird. Außerdem soll sich die Folie durch eine sehr gute Herstellbarkeit und Verarbeitbarkeit auszeichnen und nach der Metallisierung oder nach Beschichtung mit oxydischen Materialien eine gute Sauerstoffbarriere aufweisen. Zusammengefasst bestand die Aufgabe darin, eine Folie mit folgender Merkmalkombination zur Verfügung zu stellen:

- hoher Glanz
- geringe Trübung
- gute Wickelung
- geringe Sauerstoffpermeation der Folie nach Metallisierung oder nach Beschichtung mit oxydischen Materialien
- geringe Reibungskoeffizienten.

Der Glanz der Folie soll größer als 150 und die Trübung niedriger als 4,0 % sein. Die Folie soll sehr gut wickelbar sein, was insbesondere heißt, dass die aus einer Maschinenrolle hergestellten Kundenrollen so gut wie keine Längsrillen aufweisen. Dies insbesondere dann, wenn es sich um breite Kundenrollen mit großer Lauflänge handelt. Durch die metallisierte Folie sollen weniger als 1,0 $cm^3$ Sauerstoff pro Quadratmeter und pro Tag diffundieren, wenn Luft mit einem Druck von 1 bar darauf lastet. Die Folie soll den bekannten Verpackungsfolien dieser Art in den übrigen Eigenschaften mindestens gleichwertig sein. Sie soll sich zudem einfach und preiswert herstellen lassen, sowie auf den herkömmlichen Maschinen sehr gut verarbeiten lassen. Der Reibungskoeffizient auf beiden Oberflächen soll kleiner als 0,6 sein.

Bei der Herstellung der Folie soll weiterhin gewährleistet sein, dass bei der Folienherstellung anfallendes Verschnittmaterial als Regenerat in einer Menge von bis zu 60 Gew.-%, bezogen auf das Gesamtgewicht der Folie, wieder zu dem Herstellprozess zurückgeführt werden kann, ohne dass dabei die physikalischen und optischen Eigenschaften der Folie nennenswert negativ beeinflusst werden.

Die Aufgabe wird erfindungsgemäß durch die Bereitstellung einertransparenten, biaxial orientierten Polyesterfolie mit einer Schicht, die mindestens 80 Gew-% thermoplastischen Polyester enthält, gelöst, wobei die Folie zusätzlich ein Pigmentsystem in einer Menge im Bereich von 0,05 bis 0,5 Gew.-% enthält, bezogen auf das Gesamtgewicht der Folie, das durch die folgenden Merkmale gekennzeichnet ist,

a) der mittlere Durchmesser ($d_{50}$-Wert) liegt im Bereich von 1,5 bis 5 $\mu$m und
b) die Streuung der Verteilung, ausgedrückt durch den SPAN 98, ist kleiner/gleich 1,9.

Die Unteransprüche geben bevorzugte Ausführungsformen der Erfindung an, die nachstehend näher erläutert werden.

Erfindungsgemäß ist die Folie einschichtig und sie enthält bevorzugt mindestens 90 Gew.-% thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroximethylcyclohexan und Terephthalsäure [= Poly(1,4-cyclohexandimethylenterephthalat), PCDT] sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 Mol-%, bevorzugt mindestens 95 Mol-%, aus Ethylenglykol- und Terephthalsäure-Einheiten oder aus Ethylenglykol- und Naphthalin-2,6-dicarbonsäure-Einheiten bestehen. In einer ganz bevorzugten Ausführungsform enthält die Folie Polyethylenterephthalat-Homopolymer. Die restlichen Monomereinheiten stammen aus anderen aliphatischen, cycloaliphatischen oder aromatischen Diolen bzw. Dicarbonsäuren.

Geeignete andere aliphatische Diole sind beispielsweise Diethylenglykol, Triethylenglykol, aliphatische Glykole der allgemeinen Formel HO-$(CH_2)_n$-OH, wobei n eine ganze Zahl von 3 bis 6 darstellt, insbesondere Propan-1,3-diol, Butan-1,4-diol, Pentan-1,5-diol und Hexan-1,6-diol, oder verzweigte aliphatische Glykole mit bis zu 6 C-Atomen. Von den cycloaliphatischen Diolen sind Cyclohexandiole, insbesondere Cyclohexan-1,4-diol, zu nennen. Geeignete andere aromatische Diole entsprechen beispielsweise der Formel HO-$C_6H_4$-X-$C_6H_4$-OH, wobei X für -$CH_2$-, -$C(CH_3)_2$-, -$C(CF_3)_2$-, -O-, -S- oder -$SO_2$- steht. Daneben sind auch Bisphenole der Formel HO-$C_6H_4$-$C_6H_4$-OH gut geeignet.

Andere aromatische Dicarbonsäuren sind bevorzugt Benzoldicarbonsäuren, Naphtalindicarbonsäuren, beispielsweise Naphthalin-1,4- oder -1,6-dicarbonsäure, Biphenyl-x,x'-dicarbonsäuren, insbesondere Biphenyl-4,4'-dicarbonsäure, Diphenyl-acetylen-x,x'-dicarbonsäuren, insbesondere Diphenylacetylen-4,4'-dicarbonsäuren, oder Stilben-x,x'-dicarbonsäuren. Von den cycloaliphatischen Dicarbonsäuren sind Cyclohexandicarbonsäuren, insbesondere Cyclohexan-1,4-dicarbonsäure, zu nennen. Von den aliphatischen Dicarbonsäuren sind die ($C_3$ bis $C_{19}$) Alkandisäuren besonders geeignet, wobei der Alkananteil gradkettig oder verzweigt sein kann.

3

Die Herstellung der Polyester kann z.B. nach dem Umesterungsverfahren erfolgen. Dabei geht man von Dicarbonsäureestern und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den entsprechenden Dicarbonsäuren als solchen und den Diolen aus.

Zur Erzielung des gewünschten hohen Glanzes enthält die Folie das erfindungsgemäße Pigmentsystem in einer wirksamen Menge von 0,05 bis 0,5 Gew.- %, bezogen auf das Gesamtgewicht der Folie. In der bevorzugten Ausführungsform der Folie gemäß der vorliegenden Erfindung beträgt die Partikelkonzentration 0,055 bis 0,45 Gew.-%, in der besonders bevorzugten Ausführungsform 0,06 bis 0,4 Gew.-%, und richtet sich im Wesentlichen nach den zu erzielenden optischen Eigenschaften und den Laufeigenschaften der Folie.

Typische Partikelsysteme sind anorganische und/oder organische Partikeln, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Ruß, Titandioxid, Kaolin oder vernetzte Polymerpartikel, z.B. Polystyrol- oder Acrylat-Partikel.

Daneben können auch Mischungen von zwei und mehreren verschiedenen Partikelsystemen oder Mischungen von Partikelsystemen in gleicher chemischer Zusammensetzung, aber unterschiedlicher Partikelgröße gewählt werden. Die Partikeln können den Polymeren der einzelnen Schichten der Folie in den jeweils vorteilhaften Konzentrationen, z.B. als glykolische Dispersion während der Polykondensation oder über Masterbatche bei der Extrusion zugegeben werden.

Ist die Konzentration der Partikel größer als das vorgeschriebene Maß, dann werden die gewünschten optischen Eigenschaften (hohe Transparenz und hoher Glanz) nicht mehr erreicht. Die Folie wird trüb und die Oberfläche stumpf (matt). Ist andererseits die Konzentration der Partikel kleiner als das vorgeschriebene Maß, dann geht dies zu Lasten der Laufeigenschaften bzw. der Verarbeitungseigenschaften der Folie. Die Oberfläche der Folie neigt zum Verblocken, wodurch eine gute Verarbeitbarkeit, insbesondere auf schnelllaufenden Maschinen, nicht mehr gewährleistet ist.

Bevorzugte Partikeln sind $SiO_2$ in kolloidaler und in kettenartiger Form. Diese Partikeln werden sehr gut in die Polymermatrix eingebunden.

Es wurde gefunden, dass der Partikeldurchmesser und die Streuung des Durchmessers des verwendeten Pigmentsystems den Glanz, die Trübung und insbesondere die Wickelbarkeit der Folie beeinflussen. Überraschend wurde gefunden, dass eine geringere Streubreite des mittleren Durchmessers eine gleichmäßigere Luftschichtdicke zwischen den Folienlagen bewirkt und damit eine geringere Tendenz zum Blocken der Folienlagen gegeneinander, bzw. eine bessere Wickelbarkeit bewirkt.

Zur Erzielung einer möglichst niedrigen Trübung, eines möglichst hohen Glanzes und zum Erreichen einer guten Wickelbarkeit enthält die Folie gemäß der vorliegenden Erfindung ein Pigmentsystem, bei dem der mittlere Durchmesser (der $d_{50}$-Wert) im Bereich von 1,5 bis 5,0 $\mu$m liegt und die Streuung (ausgedrückt durch den SPAN 98) kleiner/gleich 1,9 ist.

In der bevorzugten Ausführungsform enthält die Deckschicht (A) der Folie gemäß der vorliegenden Erfindung ein Pigmentsystem, bei dem der mittlere Durchmesser im Bereich von 1,6 bis 4,9 $\mu$m liegt und die Streuung kleiner/gleich 1,8 ist. In der besonders bevorzugten Ausführungsform enthält die Folie gemäß der vorliegenden Erfindung ein Pigmentsystem, bei dem der mittlere Durchmesser im Bereich von 1,7 bis 4,8 $\mu$m liegt und die Streuung kleiner/gleich 1,7 ist.

Enthält die Folie dagegen ein Pigmentsystem, bei dem der mittlere Durchmesser und die Streuung außerhalb des erfindungsgemäßen Bereiches liegen, so wirkt sich dies insbesondere negativ auf die Wickelbarkeit der Folie aus. Auch kann hierdurch ebenfalls die Transparenz und der Glanz der Folie negativ beeinflusst werden.

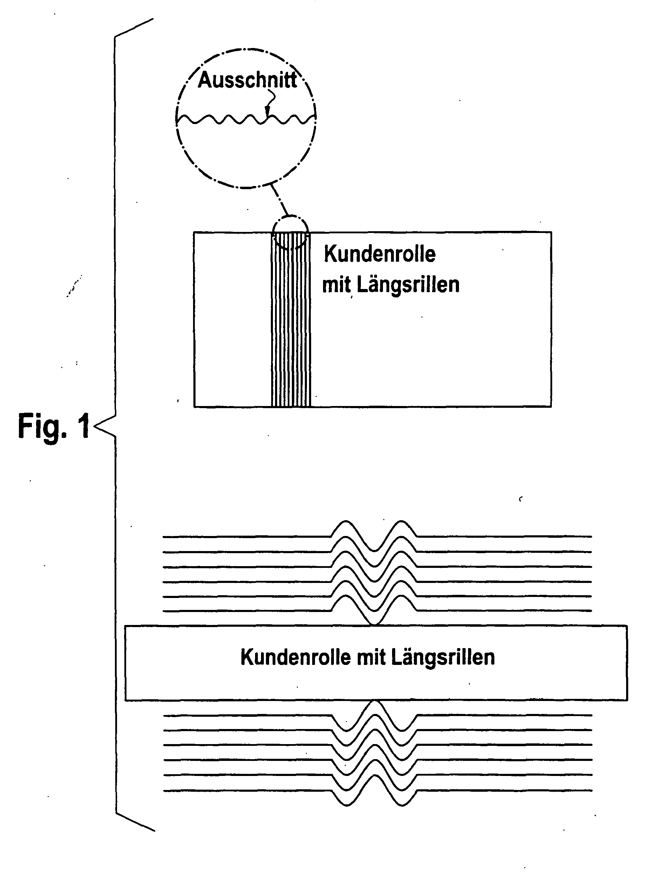

Enthält die Folie ein Pigmentsystem, bei dem der mittlere Durchmesser größer als 5,0 $\mu$m und die Streuung größer als 1,9 sind, so wird insbesondere die Wickelbarkeit der Folie negativ beeinflusst. Es tritt bei solchen Folien eine verstärkte Neigung zum Verblocken der Folienlagen gegeneinander auf. Die aus der Maschinenrolle hergestellten Kundenrollen neigen eher zur Bildung von Längsrillen. Solche unerwünschten Längsrillen sind in der **Figur 1** verdeutlicht, in der mehrere über den Umfang der Rolle deutlich sichtbare Rillen abgebildet sind, die sich im Vergleich zur Umgebung leicht eindrücken lassen. Diese Rillen schränken die Verarbeitbarkeit und die Verwendung der Folie deutlich ein. Die in die Folien teilweise irreversibel eingeprägten Längsrillen werden nämlich bei/nach der Weiterverarbeitung (z.B. Metallisierung, Bedruckung, Prägefolienanwendung) im Produkt sichtbar und beeinträchtigen als optisch/mechanischer Defekt die Verwendbarkeit der Folie unmittelbar. Insbesondere breite Rollen (über 1,5 m) und Rollen, die eine große Lauflänge aufweisen (größer als 24 000 m), neigen stark zur Ausbildung von solchen Längsrillen. Weiterhin hat sich herausgestellt, dass Folien mit dem vorgenannten, im Sinne der Erfindung ungünstigen Pigmentsystem, verstärkt zum Verlust an Transparenz und zu einem verringerten Glanz neigen.

Enthält die Folie dagegen ein Pigmentsystem, bei dem der mittlere Durchmesser kleiner als 1,5 $\mu$m und die

Streuung größer als 1,9 sind, so kann sich dies ebenfalls in einer verschlechterten Wicklung und in verschlechterten optischen Eigenschaften bemerkbar machen. Durch die Vielzahl an kleinen Pigmenten (breite Verteilung des Pigmentsystems und kleiner Partikeldurchmesser) werden in der Folie eine Vielzahl von Streuzentren gebildet, die nicht nur die Transparenz sondern auch den Glanz der Folie verringern. Weiterhin wird auch in diesem Fall die Wickelbarkeit der Rolle verschlechtert, und zwar in dem Maße, wie zuvor beschrieben. Zudem tritt bei kleineren mittleren Durchmessern als 1,5 $\mu$m eine stärkere Tendenz zum Teleskopieren bzw. Verlaufen der Folie beim Wickelvorgang ein.

Die glänzend scheinende Folie wird in einer günstigen Ausführungsform durch die folgenden weiteren Parameter beschrieben

a) die Rauigkeit der Folie, ausgedrückt als ihr $R_a$-Wert, liegt im Bereich von 30 bis 150 nm, bevorzugt von 35 bis 140 nm, besonders bevorzugt von 40 bis 130 nm. Kleinere Rauigkeitswerte als 30 nm wirken sich bei dem beanspruchten Partikelsystem negativ auf die Laufeigenschaften aus und größere Werte als 130 nm beeinträchtigen die optischen Eigenschaften der Folie.

b) Der Messwert der Oberflächengasströmung liegt im Bereich von 4 bis 200 s, bevorzugt im Bereich von 5 bis 180 s. Bei Werten oberhalb von 200 wird die Wickelbarkeit der Folie negativ beeinflusst.

Die Folie kann zusätzlich übliche Additive, wie beispielsweise Stabilisatoren enthalten. Als Stabilisatoren werden vorteilhaft beispielsweise Phosphorverbindungen, wie Phosphorsäure oder Phosphorsäureester, eingesetzt.

Die Gesamtdicke der erfindungsgemäßen Polyesterfolie kann innerhalb bestimmter Grenzen variieren. Sie liegt im Bereich von 3 bis 80 $\mu$m, insbesondere von 4 bis 50 $\mu$m, vorzugsweise von 5 bis 30 $\mu$m.

Die Erfindung betrifft auch ein Verfahren zur Herstellung der erfindungsgemäßen Polyesterfolie nach dem an sich aus der Literatur bekannten Extrusionsverfahren.

Im Rahmen dieses Verfahrens wird so vorgegangen, dass Schmelze durch eine Flachdüse extrudiert wird, die so erhaltene Vorfolie zur Verfestigung auf einer oder mehreren Walze/n abgezogen wird, die verfestigte Vorfolie anschließend biaxial gestreckt (orientiert), die biaxial gestreckte Folie thermofixiert und gegebenenfalls an der zur Behandlung vorgesehenen Oberfläche noch corona- oder flammbehandelt wird.

Die biaxiale Streckung (Orientierung) wird im allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist.

Zunächst wird, wie beim Extrusionsverfahren üblich, das Polymere bzw. die Polymermischung in einem Extruder komprimiert, verflüssigt und dabei homogenisiert, wobei die gegebenenfalls als Zusätze vorgesehenen Additive bereits im Polymer bzw. in der Polymermischung enthalten sein können. Die Schmelze wird dann durch eine Flachdüse (Breitschlitzdüse) gepresst, und die ausgepresste Schmelze wird auf einer oder mehreren Abzugswalzen abgezogen, wobei die Schmelze abkühlt und sich zu einer Vorfolie verfestigt.

Die biaxiale Verstreckung wird im allgemeinen sequentiell durchgeführt. Dabei wird die Vorfolie vorzugsweise zuerst in Längsrichtung (d.h. in Maschinenrichtung, = MD-Richtung) und anschließend in Querrichtung (d.h. senkrecht zur Maschinenrichtung, = TD-Richtung) gestreckt. Dies führt zu einer räumlichen Ausrichtung (Orientierung) der Polymerketten. Das Strecken in Längsrichtung lässt sich mit Hilfe zweier entsprechend dem angestrebten Streckverhältnis verschieden schnell rotierender Walzen durchführen. Zum Querstrecken benutzt man allgemein einen entsprechenden Kluppenrahmen, in dem die Folie an beiden Rändern eingespannt und dann bei erhöhter Temperatur nach beiden Seiten senkrecht zur Laufrichtung gezogen wird.

Die Temperatur, bei der das Strecken durchgeführt wird, kann in einem relativ großen Bereich variieren und richtet sich nach den gewünschten Eigenschaften der Folie. Im allgemeinen wird die Längsstreckung bei einer Temperatur im Bereich von 80 bis 130°C und die Querstreckung im Bereich von 90 bis 150°C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1. Vor der Querstreckung kann man eine oder beide Oberfläche (n) der Folie nach den bekannten Verfahren in-line beschichten. Die in-Line-Beschichtung kann beispielsweise zu einer verbesserten Haftung einer Metallschicht oder einer eventuell später aufzubringenden Druckfarbe, aber auch zur Verbesserung des antistatischen Verhaltens oder des Verarbeitungsverhaltens dienen.

Für die Herstellung einer Folie mit einer guten Sauerstoffbarriere (nach der Metallisierung oder nach der Beschichtung mit keramischen Substanzen), einer verbesserten Wicklung und einer verbesserten Transparenz hat es sich als günstig erwiesen, wenn die planare $\Delta p$ der Folie größer/gleich ist als $\Delta p = 0,165$, bevorzugt größer/gleich $\Delta p = 0,166$ und ganz bevorzugt größer/gleich $\Delta p = 0,167$.

Es hat sich herausgestellt, dass die wesentlichen Einflussgrößen auf die planare Orientierung $\Delta p$ die Verfahrensparameter in der Längsstreckung und in der Querstreckung sind, sowie der SV-Wert des verwendeten Rohstoffes. Zu den Verfahrensparametern gehören insbesondere die Streckverhältnisse in Längs- und in Querrichtung ($\lambda_{MD}$ und $\lambda_{TD}$), die Strecktemperaturen in Längs- und in Querrichtung ($T_{MD}$ und $T_{TD}$), die Folienbahngeschwindigkeit und die Art der Streckung, insbesondere diejenige in Längsrichtung der Maschine. Erhält man beispielsweise mit einer Maschine eine planare Orientierung von $\Delta p$ = 0,163 mit dem Parametersatz $\lambda_{MD}$ = 3,7 und $\lambda_{TD}$ = 3,8 , die Strecktemperaturen in Längs- und in Querrichtung $T_{MD}$ = 80 bis 123 °C und $T_{TD}$ = 80 bis 126 °C, so erhält man durch Erniedrigung der Längsstrecktemperatur auf $T_{MD}$ = 80 bis 118 °C oder durch Erniedrigung der Querstrecktemperatur auf $T_{TD}$ = 80 bis 122 °C oder durch Erhöhung des Längsstreckverhältnisses auf $\lambda_{MD}$ = 4,5 oder durch Erhöhung des Querstreckverhält- nisses auf $\lambda_{TD}$ = 4,0 eine planare Orientierung $\Delta p$, die im gewünschten Bereich liegt. Die Folienbahngeschwindigkeit betrug hierbei 370 m/min und der SV-Wert des Materials etwa 730. Die genannten Daten beziehen sich bei der Längsstreckung auf die sogenannte N-TEP Streckung, die sich zusammensetzt aus einem niedrig orientierenden Streckschritt (LOE = Low Orientation Elongation) und einem hoch orientierenden Streckschritt (REP = Rapid Elongation Process). Bei anderen Streckwerken ergeben sich prinzipiell die gleichen Verhältnisse, jedoch können die Zahlenwerte für die jeweiligen Verfahrensparameter geringfügig verschieden sein. Die angegeben Temperaturen beziehen sich bei der Längsstreckung auf die jeweiligen Walzentemperaturen und bei der Querstreckung auf die Folientemperaturen, die mittels IR gemessen wurden.

Bei der nachfolgenden Thermofixierung wird die Folie über eine Zeitdauer von etwa 0,1 bis 10 s bei einer Temperatur von 150 bis 250 °C gehalten. Anschließend wird die Folie in üblicher Weise aufgewickelt.

Bevorzugt wird/werden nach der biaxialen Streckung eine oder beide Oberfläche/n der Folie nach einer der bekannten Methoden corona- oder flammbehandelt. Die Behandlungsintensität wird zweckmäßig so eingestellt, dass die resultierende Oberflächenspannung der Folie im Bereich von über 45 mN/m liegt.

Zur Einstellung weiterer gewünschter Eigenschaften kann die Folie zusätzlich beschichtet werden. Typische Beschichtungen sind haftvermittelnd, antistatisch, schlupfverbessernd oder dehäsiv wirkende Schichten. Es bietet sich an, diese zusätzliche Schichten über In-line-Beschichtung mittels wässriger Dispersionen nach dem Strecken in Längsrichtung und vor dem Strecken in Querrichtung auf die Folie aufzubringen.

Die erfindungsgemäße Folie zeichnet sich durch hervorragende optische Eigenschaften, d.h., einen hohen Glanz und eine hohe Transparenz, ein sehr gutes Wickelverhalten und durch ein sehr gutes Verarbeitungsverhalten aus.

Daneben ist bei der Herstellung der Folie gewährleistet, dass das Verschnittmaterial als Regenerat in einer Menge im Bereich von 20 bis 60 Gew.-%, bezogen auf das Gesamtgewicht der Folie, wieder der Extrusion zugeführt werden kann, ohne dass dabei die physikalischen Eigenschaften der Folie nennenswert negativ beeinflußt werden, insbesondere ihr optisches Erscheinungsbild.

Die Folie eignet sich demnach ganz hervorragend für den Einsatz in der flexiblen Verpackung und zwar insbesondere dort, wo ihre besonders gute Verarbeitbarkeit voll zum Tragen kommt. Dies ist insbesondere ihr Einsatz auf schnelllaufenden Verpackungsmaschinen.

Die nachstehende Tabelle (Tabelle 1) fasst die wichtigsten erfindungsgemäßen Folieneigenschaften noch einmal auf einen Blick zusammen.

Tabelle 1

| | erfindungsgemäßer Bereich | bevorzugt | besonders bevorzugt | Einheit | Messmethode |
|---|---|---|---|---|---|
| Glanz, 20° | > 150 | > 155 | > 160 | | DIN 67530 |
| COF (Reibung) | < 0,6 | < 0,55 | < 0,50 | | DIN 53375 |
| Mittlere Rauigkeit $R_a$ | 30 bis 150 | 35 bis 140 | 40 bis 130 | nm | DIN 4768, Cut-off von 0,25 mm |
| Messwertbereich für die Ofl.-Gasströmung | 4 bis 200 | 5 bis 180 | 6 bis 160 | sec | intern |
| weitere Folieneigenschaften | | | | | |
| Trübung | < 4,0 | < 3,5 | < 3,0 | % | ASTM-D 1003-52 |
| Planare Orientierung (optional) | > 0,165 | > 0,166 | ≥ 0,167 | | intern |
| Sauerstoffpermeation nach Metallisierung von Schicht A | < 1,0 | < 0,95 | < 0,9 | cm$^3$/ (m$^{2*}$d$^*$ bar) | DIN 53380 |

Zur Charakterisierung der Rohstoffe und der Folien wurden im Rahmen der vorliegenden Erfindung die folgenden Messmethoden benutzt:

**SV-Wert (standard viscosity)**

Die Standardviskosität SV (DCE) wird, angelehnt an DIN 53726, in Dichloressigsäure gemessen.

Die intrinsische Viskosität (IV) berechnet sich wie folgt aus der Standardviskosität

$$IV\ (DCE) = 6{,}907 \cdot 10^{-4}\ SV\ (DCE) + 0{,}063096$$

**Reibung (COF)**

Die Reibung wurde nach DIN 53 375 bestimmt. Die Gleitreibungszahl wurde 14 Tage nach der Produktion gemessen.

**Oberflächenspannung**

Die Oberflächenspannung wurde mittels der sogenannten Tintenmethode (DIN 53 364) bestimmt.

**Trübung**

Die Trübung nach Hölz wurde in Anlehnung an ASTM-D 1003-52 bestimmt, wobei jedoch zur Ausnutzung des optimalen Messbereichs an vier übereinanderliegenden Folienlagen gemessen und anstelle einer 4°-Lochblende eine 1°-Spaltblende eingesetzt wurde.

**Glanz**

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° oder 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muss zusammen mit dem Einstrahlwinkel angegeben werden.

**Oberflächengasströmungszeit**

Das Prinzip des Messverfahrens basiert auf der Luftströmung zwischen einer Folienseite und einer glatten Silizium-Wafer-Platte. Die Luft strömt von der Umgebung in einen evakuierten Raum, wobei die Grenzfläche zwischen Folie und Silizium-Wafer-Platte als Strömungswiderstand dient.

Eine runde Folienprobe wird auf einer Silizium-Wafer-Platte, in deren Mitte eine Bohrung die Verbindung zu dem Rezipienten gewährleistet, gelegt. Der Rezipient wird auf einen Druck kleiner 0,1 mbar evakuiert. Bestimmt wird die Zeit in Sekunden, die die Luft benötigt, um in dem Rezeptienten einen Druckanstieg von 56 mbar zu bewirken. Messbedingungen:

| | |
|---|---|
| Messfläche | 45,1 cm$^2$ |
| Anpressgewicht | 1276 g |
| Lufttemperatur | 23 °C |
| Luftfeuchte | 50 % relative Feuchte |
| Gassammelvolumen | 1,2 cm$^3$ |
| Druckintervall | 56 mbar |

**Bestimmung der planaren Orientierung Δp**

Die Bestimmung der planaren Orientierung erfolgt über die Messung der Brechungsindizes mit dem Abbe-Refraktometer nach der internen Betriebsvorschrift 24. Probenvorbereitung:

Probengröße und Probenlänge:     60 bis 100 mm

| Probenbreite: | entspricht Prismenbreite von 10 mm |
|---|---|

Zur Bestimmung von $n_{MD}$ und $n_a$ (=$n_z$) muss die zu messende Probe aus der Folie ausgeschnitten werden, bei der die Laufkante der Probe exakt mit der TD-Richtung übereinstimmen muss. Zur Bestimmung von $n_{TD}$ und $n_a$ (=$n_z$) muss die zu messende

Probe aus der Folie ausgeschnitten werden, bei der die Laufkante der Probe exakt mit der MD-Richtung übereinstimmen muss. Die Proben sind aus der Mitte der Folienbahn zu entnehmen. Es ist dafür Sorge zu tragen, dass das Abbe-Refraktometer eine Temperatur von 23 °C hat. Auf das vor der Messung gut gesäuberte untere Prisma wird mit Hilfe eines Glasstabes ein wenig Dijodmethan (N=1,745) bzw. Dijodmethan-Bromnaphthalin-Gemisch aufgetragen. Der Brechungsindex des Gemisches muss größer als 1,685 sein. Darauf wird zuerst die in TD-Richtung ausgeschnittene Probe aufgelegt, so dass die gesamte Prismenoberfläche bedeckt ist. Mit Hilfe eines Papiertaschentuches wird nun die Folie fest auf das Prisma aufgebügelt, so dass die Folie fest und glatt aufliegt. Die überflüssige Flüssigkeit muss abgesaugt werden. Danach wird ein wenig von der Messflüssigkeit auf die Folie getropft. Das zweite Prisma wird heruntergeklappt und fest angedrückt. Nun wird mit Hilfe der rechten Rändelschraube die Anzeigeskala soweit gedreht, bis im Bereich 1,62 bis 1,70 ein Übergang von hell auf dunkel im Sichtfenster zu sehen ist. Ist der Übergang von hell auf dunkel nicht scharf, werden mit Hilfe der oberen Rändelschraube die Farben so zusammengeführt, dass nur eine helle und eine dunkle Zone sichtbar ist. Die scharfe Übergangslinie wird mit Hilfe der unteren Rändelschraube in den Kreuzungspunkt der beiden (im Okular) diagonalen Linien gebracht. Der nun in der Messskala angezeigte Wert wird abgelesen und in das Messprotokoll eingetragen. Dies ist der Brechungsindex in Maschinenrichtung $n_{MD}$. Nun wird die Skala mit der unteren Rändelschraube soweit verdreht, dass der im Okular sichtbare Bereich zwischen 1,49 und 1,50 zu sehen ist.

Jetzt wird der Brechungsindex in $n_a$ bzw. $n_z$ (in Dickenrichtung der Folie) ermittelt. Damit der nur schwach sichtbare Übergang besser zu sehen ist, wird auf das Okular eine Polarisationsfolie gelegt. Diese ist solange zu drehen, bis der Übergang deutlich zu sehen ist. Es gilt das gleiche wie bei der Bestimmung von $n_{MD}$. Ist der Übergang von hell auf dunkel nicht scharf (farbig), dann werden mit Hilfe der oberen Rändelschraube die Farben zusammengeführt, so dass ein scharfer Übergang zu sehen ist. Diese scharfe Übergangslinie wird mit Hilfe der unteren Rändelschraube in den Kreuzungspunkt der beiden diagonalen Linien gebracht und den auf der Skala angezeigten Wert abgelesen und in die Tabelle eingetragen.

Anschließend wird die Probe gedreht und die entsprechenden Brechungsindizes $n_{MD}$ und $n_a$ (=$n_z$) der anderen Oberflächenseite gemessen und in eine entsprechende Tabelle eingetragen.

Nach der Bestimmung der Brechungsindizes in MD-Richtung bzw. in Dickenrichtung wird der in MD-Richtung herausgeschnittene Pröbenstreifen aufgelegt und entsprechend die Brechungsindizes $n_{TD}$ und $n_a$ (= $n_z$) bestimmt. Der Streifen wird umgedreht und die Werte für die B-Seite gemessen. Die Werte für die A-Seite und die B-Seite werden zu mittleren Brechungswerten zusammengefasst. Die Orientierungswerte werden dann aus den Brechungsindizes nach den folgenden Formeln berechnet:

$$\Delta n = n_{MD} - n_{TD}$$

$$\Delta p = (n_{MD} + n_{TD})/2 - n_z$$

$$n_{av} = (n_{MD} + n_{TD} + n_z)/3$$

**Messung des mittleren Durchmessers $d_{50}$**

Die Bestimmung des mittleren Durchmessers $d_{50}$ wurde mittels Laser auf einem Malvern MasterSizer nach der Standardmethode durchgeführt (andere Messgeräte sind z.B. Horiba LA 500 oder Sympathec Helos, welche das gleiche Messprinzip verwenden). Die Proben wurden dazu in eine Küvette mit Wasser gegeben und diese dann in das Messgerät gestellt. Der Messvorgang läuft automatisch ab und beinhaltet auch die mathematische Bestimmung des $d_{50}$-Wertes.

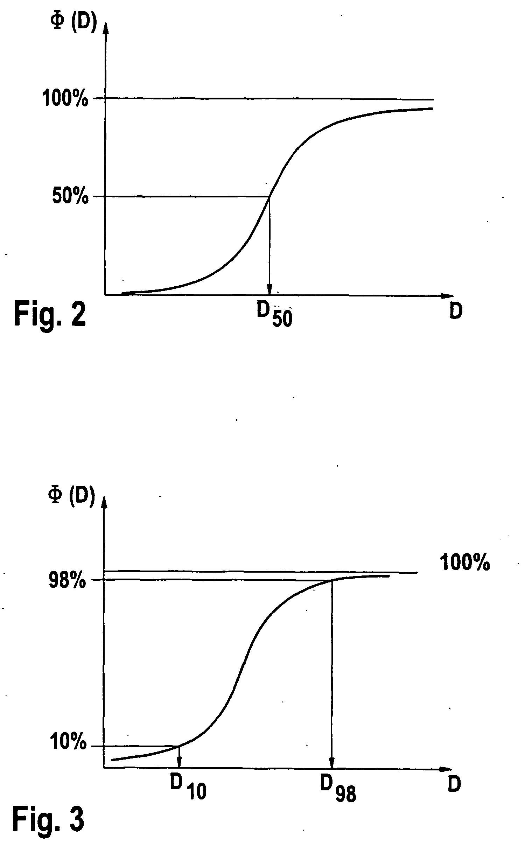

Der $d_{50}$-Wert wird dabei definitionsgemäß aus der (relativen) Summenkurve der Partikelgrößenverteilung bestimmt: Der Schnittpunkt des 50 % Ordinatenwertes mit der Summenkurve liefert auf der Abszissenachse sofort den gewünschten $d_{50}$-Wert, was in **Figur 2** näher veranschaulicht ist.

**Messung der SPAN 98**

Die Bestimmung der SPAN 98 wurde mit dem gleichen Messgerät durchgeführt, wie oben bei der Bestimmung des mittleren Durchmessers $d_{50}$ beschrieben. Die SPAN 98 ist dabei wie folgt definiert:

$$SPAN\,98 = \frac{d_{98} - d_{10}}{d_{50}}$$

Für die Ermittlung von $d_{98}$ und $d_{10}$ wird wiederum die (relative) Summenkurve der Partikelgrößenverteilung benutzt. Der Schnittpunkt des 98 % Ordinatenwertes mit der Summenkurve liefert auf der Abszissenachse sofort den gewünschten $d_{98}$-Wert und der Schnittpunkt des 10 % Ordinatenwertes mit der Summenkurve liefert auf der Abszissenachse sofort den gewünschten $d_{10}$-Wert, was in **Figur 3** näher veranschaulicht ist.

**Beispiel 1**

Chips aus Polyethylenterephthalat (hergestellt über das Umesterungsverfahren mit Mn als Umesterungskatalysator, Mn-Konzentration: 100 ppm) wurden bei einer Temperatur von 150 °C auf eine Restfeuchte von unterhalb 100 ppm getrocknet und mit dem erfindungsgemäßen Füllstoff dem Extruder zugeführt.
Dann wurde durch Extrusion und anschließende stufenweise Orientierung in Längs- und Querrichtung eine transparente Folie mit einer Dicke von 12 $\mu$m hergestellt.
Die genaue Zusammensetzung der Folie war:

90 Gew.-%    Polyethylenterephthalat mit einem SV-Wert von 800
10 Gew.-%    Masterbatch aus 99 Gew.-% Polyethylenterephthalat und 1,0 Gew.-% Kieselsäurepartikel (®Sylysia 320 von der Fa. Fuji/Japan) mit einem $d_{50}$-Wert von 2,5 $\mu$m und einer SPAN 98 von 1,4.

Die Herstellungsbedingungen in den einzelnen Verfahrensschritten waren:

| | | | |
|---|---|---|---|
| Extrusion: | Temperatur | 290 | °C |
| | Düsenspaltweite: | 2,5 | mm |
| | Temperatur der Abzugswalze | 30 | °C |
| Längsstreckung: | Temperatur: | 80-126 | °C |
| | Längsstreckverhältnis: | 4,5 | |
| Querstreckung: | Temperatur: | 80-135 | °C |
| | Querstreckverhältnis | 4,0 | |
| Fixierung: | Temperatur: | 230 | °C |
| | Dauer: | 3 | s |

Die Folie hatte den geforderten hohen Glanz und die geforderte niedrige Trübung. Weiterhin zeigt die Folie das gewünschte Wickelverhalten und das gewünschte Verarbeitungsverhalten. Der Folienaufbau und die erzielten Eigenschaften derart hergestellter Folien sind in den Tabellen 2 und 3 dargestellt.

**Beispiel 2**

Im Vergleich zu Beispiel 1 wurde jetzt die Partikelkonzentration erhöht. Hierdurch haben sich der Glanz der Folie marginal verringert und die Trübung marginal erhöht. Die Wickelbarkeit wurde jedoch dagegen nochmals verbessert.

**Beispiel 3**

Im Vergleich zu Beispiel 1 wurden jetzt der Partikeldurchmesser bei gleicher Streubreite erhöht. Hierdurch haben sich der Glanz der Folie marginal verringert und die Trübung marginal erhöht. Die Wickelbarkeit konnte dagegen nochmals verbessert werden.

**Beispiel 4**

Im Vergleich zu Beispiel 1 wurde ein weiters Pigmentsystem zugegeben. Außer den zuvor genannten Pigmenten enthielt die Folie zusätzlich noch 500 ppm ®Aerosil TT 6000 (von der Fa. Degussa), wobei es sich um ein pyrogenes Silica handelt.

**Beispiel 5**

Im Vergleich zu Beispiel 4 wurde anstelle des Sylysia 320 das grobere Pigment Sylysia 430 verwendet.

**Vergleichsbeispiel 1**

Im Vergleich zu Beispiel 1 wurde mit einem herkömmlichen Pigmentsystem mit gröberer Korngröße und breiterer Streubreite rezepturiert. Die Wickelbarkeit der Folie ist deutlich schlechter geworden und die optischen Eigenschaften haben sich ebenfalls verschlechtert.

Tabelle 2

| Beispiel | Foliendicke $\mu$m | Pigmenttyp | mittlerer Pigment-Durchmesser $d_{50}$ in [$\mu$m] | Pigmentkonzentrationen [ppm] |
|---|---|---|---|---|
| B 1 | 12 | Sylysia 320 | 2,5 | 1000 |
| B 2 | 12 | Sylysia 320 | 2,5 | 1800 |
| B 3 | 12 | Sylysia 430 | 3,4 | 1000 |
| B 4 | 12 | Sylysia 320 + Aerosil TT 600 | 2,5 0,05 | 1000 500 |
| B 5 | 12 | Sylysia 430 + Aerosil TT 600 | 3,4 0,05 | 1000 500 |
| VB 1 | 12 | $d_{50}$=5,5; SPAN98=2,2 + Aerosil TT 600 | 2,5 0,04 | 1000 500 |

Tabelle 3

| Beispiel | Reibung COF A-Seite gegen C-Seite | Mittlere Rauigkeit $R_a$ | | Messwerte für die Gasströmung | | $\Delta p$ | Glanz | | Trübung | Wickelverhalten und Handling | Verarbeitungsverhalten |
|---|---|---|---|---|---|---|---|---|---|---|---|
| | | A-Seite | C-Seite | A-Seite | C-Seite | | A-Seite | C-Seite | | | |
| B 1 | 0,45 | 57 | 53 | 91 | 86 | 0,167 | 182 | 180 | 3,0 | + | + |
| B 2 | 0,41 | 61 | 60 | 71 | 74 | 0,167 | 171 | 173 | 3,5 | ++ | ++ |
| B 3 | 0,48 | 88 | 84 | 30 | 24 | 0,167 | 174 | 175 | 3,1 | ++ | ++ |
| B 4 | 0,38 | 60 | 63 | 82 | 73 | 0,167 | 170 | 173 | 3,2 | ++ | ++ |
| B 5 | 0,40 | 84 | 82 | 28 | 31 | 0,167 | 170 | 169 | 3,3 | +++ | +++ |
| VB 1 | | | | | | | | | | - | - |

Zeichenerklärung beim Wickelverhalten und beim Verarbeitungsverhalten der Folien:

+++: keine Klebeneigung an Walzen oder anderen mechanischen Teilen, keine Blockprobleme und absolut keine Längsrillen beim Wickeln, hervorragend gutes Verarbeitungsverhalten

++: keine Klebeneigung an Walzen oder anderen mechanischen Teilen, keine Blockprobleme und keine sichtbaren Längsrillen beim Wickeln, sehr gutes Verarbeitungsverhalten

+: keine Klebeneigung an Walzen oder anderen mechanischen Teilen, keine Blockprobleme und höchstens eine schmale, nicht irreversibel verprägte Längsrille beim Wickeln, gutes Verarbeitungsverhalten

-: Klebeneigung an Walzen oder anderen mechanischen Teilen, Blockprobleme und Längsrillen beim Wickeln und keine gute Verarbeitung auf Verpackungsmaschinen

**Patentansprüche**

1. Transparente, biaxial orientierte Polyesterfolie, die mindestens 80 Gew.-% thermoplastischen Polyester enthält, **dadurch gekennzeichnet, dass** sie zusätzlich ein Pigmentsystem in einer Menge im Bereich von 0,05 bis 0,5 Gew.-% enthält, bezogen auf das Gesamtgewicht der Folie, das die folgenden Merkmale aufweist:

   a) der mittlere Korndurchmesser ($d_{50}$-Wert) liegt im Bereich von 1,5 bis 5 $\mu$m und
   b) die Streuung der Verteilung, ausgedrückt durch den SPAN 98, ist kleiner/gleich 1,9.

2. Transparente Polyesterfolie nach Anspruch 1, **dadurch gekennzeichnet, dass** sie ein Pigmentsystem enthält, das einen mittleren Korndurchmesser ($d_{50}$-Wert) im Bereich von 1,6 bis 4,9, bevorzugt im Bereich von 1,7 bis 4,8 $\mu$m, aufweist.

3. Transparente Polyesterfolie nach Anspruch 1 oder 2, **dadurch gekennzeichnet, dass** sie ein Pigmentsystem enthält, das einen SPAN 98 von kleiner/gleich 1,8, bevorzugt von kleiner 1,7, aufweist.

4. Transparente Polyesterfolie nach einem der Ansprüche 1 bis 3, **dadurch gekennzeichnet, dass** sie eine Dicke im Bereich von 1 bis 50 $\mu$m besitzt.

5. Transparente Polyesterfolie nach einem der Ansprüche 1 bis 4, **dadurch gekennzeichnet, dass** ihr Glanz größer/gleich 150 und ihre Trübung kleiner/gleich 4,0 % ist.

6. Transparente Polyesterfolie nach einem der Ansprüche 1 bis 5, **dadurch gekennzeichnet, dass** ihre Rauigkeit, ausgedrückt als ihr $R_a$-Wert, im Bereich von 30 bis 150 nm liegt, bevorzugt von 35 bis 140 nm, besonders bevorzugt von 40 bis 130 nm, und dass ihr Messwert der Oberflächengasströmung im Bereich von 4 bis 200 s liegt, bevorzugt von 5 bis 180 s.

7. Transparente Polyesterfolie nach einem der Ansprüche 1 bis 6, **dadurch gekennzeichnet, dass** die planare Orientierung $\Delta$p der Folie größer/gleich 0,165 ist, bevorzugt größer/gleich 0,166, ganz bevorzugt größer/gleich 0,167.

8. Verfahren zum Herstellen einer transparenten Polyesterfolie nach einem der Ansprüche 1 bis 7 nach dem Extrusionsverfahren, bei dem zunächst der Polyester in einem Extruder komprimiert, verflüssigt und dabei homogenisiert wird, wobei die gegebenenfalls als Zusätze vorgesehenen Additive bereits im Polymer enthalten sein können, und bei dem die Schmelze dann durch eine Flachdüse gepresst, und die ausgepresste Schmelze auf einer oder mehreren Abzugswalzen abgezogen und zu einer Vorfolie verfestigt, die verfestigte Vorfolie anschließend biaxial gestreckt, die biaxial gestreckte Folie thermofixiert und gegebenenfalls an der zur Behandlung vorgesehenen Oberfläche noch corona- oder flammbehandelt wird, **dadurch gekennzeichnet, dass** die Temperatur bei der Längsstreckung im Bereich von 80 bis 130 °C und bei der Querstreckung im Bereich von 90 bis 150 °C eingestellt wird und dass das Längsstreckverhältnis im Bereich von 2,5:1 bis 6:1, bevorzugt von 3:1 bis 5,5:1, und das Querstreckverhältnis im Bereich von 3,0:1 bis 5,0:1, bevorzugt von 3,5:1 bis 4,5:1, liegt.

9. Verfahren nach Anspruch 8, **dadurch gekennzeichnet, dass** die Folie nach dem Strecken über eine Zeitdauer im Bereich von 0,1 bis 10 s bei einer Temperatur von 150 bis 250 °C gehalten und dabei thermofixiert wird.

10. Verfahren nach Anspruch 8 oder 9, **dadurch gekennzeichnet, dass** zusätzlich eine oder beide Oberfläche/n der Folie corona- oder flammbehandelt wird/werden, wobei die Behandlungsintensität so eingestellt wird, dass sich eine Oberflächenspannung der Folie im Bereich von größer/gleich 45 mN/m ergibt.

11. Verfahren nach einem der Ansprüche 8 bis 10, **dadurch gekennzeichnet, dass** Verschnittmaterial, das während der Folienherstellung anfällt, als Regenerat in einer Menge im Bereich von 20 bis 60 Gew.-%, bezogen auf das Gesamtgewicht der Folie, wieder der Extrusion zugeführt wird.

12. Verwendung einer transparenten Folie nach einem der Ansprüche 1 bis 7 für den Einsatz in der flexiblen Verpackung, insbesondere auf schnelllaufenden Verpackungsmaschinen, oder im industriellen Sektor, insbesondere für Prägeanwendungen.

**Claims**

1. A transparent, biaxially oriented polyester film which comprises at least 80% by weight of thermoplastic polyester, wherein the film also comprises an amount in the range from 0.05 to 0.5% by weight, based on the total weight of the film, of a pigment system which has the following features:

   a) the median grain diameter ($d_{50}$) is in the range from 1.5 to 5 $\mu$m and
   b) the spread of the distribution, expressed via the SPAN 98, is less than or equal to 1.9.

2. The transparent polyester film as claimed in claim 1, which comprises a pigment system which has a median grain diameter ($d_{50}$) in the range from 1.6 to 4.9 $\mu$m, preferably in the range from 1.7 to 4.8 $\mu$m.

3. The transparent polyester film as claimed in claim 1 or 2, which comprises a pigment system which has a SPAN 98 of less than or equal to 1.8, preferably less than 1.7.

4. The transparent polyester film as claimed in any of claims 1 to 3, whose thickness is in the range from 1 to 50 $\mu$m.

5. The transparent polyester film as claimed in any of claims 1 to 4, whose gloss is greater than or equal to 150 and whose haze is less than or equal to 4.0%.

6. The transparent polyester film as claimed in any of claims 1 to 5, whose roughness, expressed as its $R_a$ value, is in the range from 30 to 150 nm, preferably from 35 to 140 nm, particularly preferably from 40 to 130 nm, and whose value measured for surface gas flow is in the range from 4 to 200 s, preferably from 5 to 180 s.

7. The transparent polyester film as claimed in any of claims 1 to 6, whose planar orientation $\Delta p$ is greater than or equal to 0.165, preferably greater than or equal to 0.166, very preferably greater than or equal to 0.167.

8. A process for producing a transparent polyester film as claimed in any of claims 1 to 7 by extrusion, in which the polyester is first compressed, plasticized, and thus homogenized in an extruder, at which juncture any additives provided may already be present in the polymer, and in which the melt is then pressed through a flat-film die, and the extruded melt is drawn off on one or more take-off rolls and solidified to give a prefilm, and the solidified prefilm is then biaxially stretched, and the biaxially stretched film is heat-set and, where appropriate, also corona- or flame-treated on the surface intended for treatment, which comprises using a longitudinal stretching temperature in the range from 80 to 130°C and a transverse stretching temperature in the range from 90 to 150°C and using a longitudinal stretching ratio in the range from 2.5:1 to 6:1, preferably from 3:1 to 5.5:1, and using a transverse stretching ratio in the range from 3.0:1 to 5.0:1, preferably from 3.5:1 to 4.5:1.

9. The process as claimed in claim 8, wherein, after stretching, the film is held at a temperature of from 150 to 250°C for a period in the range from 0.1 to 10 s, and is thus heat-set.

10. The process as claimed in claim 8 or 9, wherein one or both surfaces of the film are also corona- or flame-treated, the intensity of the treatment being adjusted so as to give a surface tension of the film in the range greater than or equal to 45 mN/m.

11. The process as claimed in any of claims 8 to 10, wherein cut material arising during film production is reintroduced to the extrusion process as regrind in amounts in the range from 20 to 60% by weight, based on the total weight of the film.

12. The use of a transparent film as claimed in any of claims 1 to 7 in flexible packaging, in particular on high-speed packaging machinery, or in the industrial sector, in particular for stamping applications.

**Revendications**

1. Feuille en polyester transparente à orientation biaxiale qui comprend au moins 80% en poids de polyester thermoplastique, **caractérisée en ce qu'**elle comprend en outre un système de pigment dans une quantité de l'ordre de 0,05 à 0,5% en poids par rapport au poids total de la feuille, laquelle présente les caractéristiques suivantes :

a) le diamètre de grain moyen (valeur $d_{50}$) se situe dans le domaine de 1,5 à 5 $\mu$m et

b) la dispersion de la répartition, exprimée par le SPAN 98, est inférieure/égale à 1,9.

2. Feuille en polyester transparente selon la revendication 1, **caractérisée en ce qu'**elle comprend un système de pigment qui présente un diamètre de grain moyen (valeur $d_{50}$) dans le domaine de 1,6 à 4,9, de préférence dans le domaine de 1,7 à 4,8 $\mu$m.

3. Feuille en polyester transparente selon la revendication 1 ou 2, **caractérisée en ce qu'**elle comprend un système de pigment qui présente un SPAN 98 inférieur/égal à 1,8, de préférence inférieur à 1,7.

4. Feuille en polyester transparente selon l'une des revendications 1 à 3, **caractérisée en ce qu'**elle possède une épaisseur dans le domaine de 1 à 50 $\mu$m.

5. Feuille en polyester transparente selon l'une des revendications 1 à 4, **caractérisée en ce que** son brillant est supérieur/égal à 150 et sa turbidité est inférieure/égale à 4%.

6. Feuille en polyester transparente selon l'une des revendications 1 à 5, **caractérisée en ce que** sa rugosité, exprimée en tant que sa valeur $R_a$, se situe dans le domaine de 30 à 150 nm, de préférence de 35 à 140 nm, mieux encore de 40 à 130 nm, et que sa valeur de mesure de l'écoulement gazeux à la surface se situe dans le domaine de 4 à 200, de préférence de 5 à 180 s.

7. Feuille en polyester transparente selon l'une des revendications 1 à 6, **caractérisée en ce que** l'orientation planaire $\Delta$p de la feuille est supérieure/égale à 0,165, de préférence supérieure/égale à 0,166 et mieux encore, supérieure/égale à 0,167.

8. Procédé pour la fabrication d'une feuille en polyester transparente selon l'une des revendications 1 à 7 selon le procédé d'extrusion dans lequel le polyester est d'abord comprimé dans une extrudeuse, fluidifié et, ce faisant, homogénéisé, les additifs éventuellement prévus comme adjonctions pouvant déjà être contenus dans le polymère, et dans lequel la masse fondue est ensuite comprimée à travers une buse plate et la masse fondue comprimée est étirée sur un ou plusieurs cylindre d'extraction et consolidée pour donner une préfeuille, la préfeuille étant ensuite étendue biaxialement, la feuille étirée biaxialement étant thermofixée et subissant encore éventuellement sur la surface prévue pour le traitement un traitement corona ou à la flamme, **caractérisé en ce que** la température pour l'allongement dans le sens de la longueur est réglée dans le domaine de 80 à 130°C et pour l'allongement dans le sens transversal est réglé dans le domaine de 90 à 150°C et que le rapport d'extension dans le sens de la longueur se situe dans le domaine de 2,5:1 à 6:1, de préférence de 3:1 à 5,5:1 et le rapport d'allongement dans le sens transversal se situe dans le domaine de 3,0:1 à 5,0:1, mieux encore de 3,5:1 à 4,5:1.

9. Procédé selon la revendication 8, **caractérisé en ce que** la feuille est maintenue pendant une certaine durée après l'allongement dans le domaine de 0,1 à 10 s à une température de 150 à 250°C et thermofixée en même temps.

10. Procédé selon l'une des revendications 8 ou 9, **caractérisé en ce que**, en outre, une surface ou les deux de la feuille fait(font) l'objet d'un traitement corona ou à la flamme, l'intensité du traitement étant réglée de manière à ce qu'une tension superficielle de la feuille dans le domaine inférieur/égal à 45 mN/m soit obtenue.

11. Procédé selon l'une des revendications 8 à 10, **caractérisé en ce que** le matériel de découpe, qui est produit pendant la fabrication des feuilles, est ramené à l'extrusion comme matériel recyclé selon une quantité qui se situe entre 20 à 60% en poids par rapport au poids total de la feuille.

12. Application d'une feuille transparente selon l'une des revendications 1 à 7 pour une utilisation dans l'emballage flexible, en particulier sur des machines d'emballage à grande vitesse, ou dans le secteur industriel, en particulier pour des applications d'estampage.

**Fig. 1**

Ausschnitt

Kundenrolle
mit Längsrillen

Kundenrolle mit Längsrillen

**Fig. 2**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 347646 A
- EP 0514129 A
- EP 0604057 A
- DE 1694404 A
- EP 0502745 A